# FASCICULE DE BREVET EUROPEEN

(11) **EP 1 815 220 B1**
(45) Date de publication et mention de la délivrance du brevet: **13.03.2013**
(21) Numéro de dépôt: 05815627.4
(22) Date de dépôt: 31.10.2005
(51) Int. Cl.: G01K 1/14

(54) **DISPOSITIF DE CAPTEUR COMPORTANT UN ELEMENT DE MESURE DEMONTABLE**
SENSORVORRICHTUNG MIT ABNEHMBAREM MESSELEMENT
SENSOR DEVICE FOR PROVIDED WITH A REMOVABLE MEASURING ELEMENT

(30) Priorité: 02.11.2004 FR 0452497
(43) Date de publication de la demande: 08.08.2007
(73) Titulaire: Thermatec Process Control, 67720 Weyersheim (FR)
(72) Inventeur: DOERFLINGER, Michel, F-67670 WITTERSHEIM (FR)
(74) Mandataire: Rhein, Alain
(86) Numéro de dépôt international: PCT/FR2005/050918
(87) Numéro de publication internationale: WO 2006/048579

(56) Documents cités:
- GB-A- 1 175 333
- GB-A- 1 338 168
- US-A- 3 753 787
- US-A- 4 510 343
- US-A- 4 653 935

## Description

L'invention concerne un dispositif de capteur comportant un élément de mesure muni d'au moins une sonde de mesure conçue apte à prendre position au fond d'un support de montage pourvu, à une extrémité débouchante, d'une tête de fermeture conçue pour être traversée, notamment de manière étanche, par au moins un câble de raccordement électrique défini apte à relier la ou les sondes à une tête de connexion externe.

Tout particulièrement, la présente invention s'applique aux dispositifs de capteur du type équipant de nombreuses installations de génie de procédé industriel, dispositif de capteur intégrant une ou plusieurs sondes de nature variable, comme par exemple des sondes à résistance, des thermistances, des thermocouples...

De tels dispositifs de capteurs sont habituellement définis par un support de montage équipant une installation quelconque et dans lequel vient à être introduit un élément de mesure démontable pourvu d'une ou plusieurs de ces sondes et se présentant, généralement, sous forme d'un corps rigide. Cet élément de mesure comporte encore au moins un câble de raccordement assurant la retransmission des informations récoltées par la ou les sondes au niveau d'une tête de connexion externe à laquelle aboute ce ou ces câbles de raccordement.

Tout particulièrement, cette tête de connexion externe, directement monté sur le support de montage, est elle-même reliée à une unité de gestion de l'installation assurant le pilotage de cette dernière.

Evidemment, les supports de montage de ces dispositifs de capteurs sont habituellement montés à demeure sur les cuves, tuyauteries, réacteurs ou autre, que comporte une installation de génie de procédés industriels. Ils sont d'ailleurs adaptés à cette implantation, en particulier en ce qui concerne leurs dimensions et celles de l'élément de mesure démontable.

Ainsi, par exemple, la longueur d'un support de montage, d'un dispositif de capteur de température dépend, fréquemment, de la profondeur à laquelle on souhaite prélever la température dans un milieu déterminé. A ce propos, on observera que cette longueur des supports de montage peut dépendre de bien d'autres considérations techniques.

L'on comprend bien que les éléments de mesure prenant position dans ces supports de montage doivent, eux-mêmes, être adaptés à la section interne et la longueur de ces derniers pour que la ou les sondes dont ils sont pourvus soient en mesure de retransmettre des données représentatives des informations que l'on tente de recueillir par leur intermédiaire.

Dans ces conditions, les fabricants de dispositifs de capteurs doivent proposer à leur clientèle toute une gamme de produits adaptés, autrement dit des éléments de mesure ayant à chaque fois la bonne longueur pour leur raccordement à la tête de connexion. Ces éléments de mesure sont donc fabriqués à la commande.

Bien évidemment, l'utilisateur doit, lui, maintenir systématiquement dans son stock autant d'éléments de mesure différents qu'il comporte de supports de montage distincts. En effet, à supposer qu'il ne dispose pas de la bonne pièce de rechange en cas de dysfonctionnement d'un dispositif de capteur, il peut être amené à stopper le fonctionnement total de l'installation pour raison de sécurité évidente.

A ce propos, le remplacement même d'un élément de mesure peut s'avérer très complexe. En effet, en raison de la rigidité d'un tel élément de mesure et de sa dimension, son démontage peut s'avérer difficile, car nécessitant un espace suffisant dans l'axe du support de montage, espace au moins égal, voire supérieur, à la longueur de cet élément de mesures. Il est pourtant indispensable que le remplacement d'un tel élément puisse se faire dans un temps minimum d'intervention.

Il est par exemple connu par le document GB-1.338.168 un capteur plus particulièrement destiné à mesurer la température de matière plastique à l'état liquide, dans le cadre de machines d'injection. Il comporte un corps cylindrique externe muni d'un filetage pour sa fixation, de manière escamotable, à une tête d'extrusion ou similaire. Ce corps cylindrique externe comporte un évidement interne dans lequel peut être engagé un corps cylindrique interne, maintenu au moyen d'un circlips. Ce corps interne comporte une perforation dans laquelle sont engagés un tube céramique et un embout en cuivre intégrant un thermocouple. De plus, à une première extrémité, il comporte encore un évidement de forme conique qui communique avec cette perforation et dans lequel est placé un insert céramique de faible résistance thermique, avec, noyé à l'intérieure, un autre thermocouple. A l'extrémité opposée, la perforation débouche dans un évidement de section plus importante et comportant un taraudage pour coopérer avec le filetage externe d'une douille. Entre celle-ci et le tube céramique est intercalée d'une bague. Les câbles de raccordement des thermocouples traversent le tube céramique et la douille. L'étanchéité est assurée au moyen d'un dispositif de serrage de type presse-étoupe monté extérieurement sur cette douille.

De toute évidence, il s'agit, là, d'un capteur de température très spécifique au travers duquel il est recherché une mesure différentielle de température. L'interchangeabilité des éléments de mesure n'est pas prévue.

Il est encore connu par le document GB-1.175.333, un capteur de température pour moteur à combustion interne, capteur comportant un support de montage pourvu d'un évidement interne au fond duquel prend position la sonde de mesure composée de deux pièces en argent prenant en sandwich une résistance.

Si la première pièce en argent est scellée dans le fond de l'évidement du corps de montage, la seconde est engagée dans ce dernier et guidée au moyen d'un disque. L'ensemble est maintenu en position à l'aide d'un ressort sur lequel appuie un manchon en matière isolant, lui-même maintenu en position à l'aide d'un embout de raccordement scellé de manière indémontable sur ledit support de montage.

Malgré la pluralité des supports de montage existants La présente invention se veut à même de répondre problème consiste à faciliter le remplacement de l'élément de mesure au travers d'une standardisation de ces derniers. Ainsi, de manière astucieuse, un élément de mesure donné peut être très facilement adapté et monté dans tout type de support de montage dans lesquels il est prévu apte à prendre position.

En particulier, l'on a imaginé rendre cet élément de mesure démontable et à équiper le support de montage d'une tête de fermeture escamotable, susceptible d'être traversée, notamment de manière étanche, par les câbles de raccordement dont est pourvu l'élément de mesure. D'ailleurs, celui-ci est avantageusement équipé d'une sur longueur de câbles de raccordement souples en vu du déport la tête de connexion d'un dispositif de capteur, solution qui permet de standardiser un élément de mesure pour toute une gamme de dispositifs de capteur de température et accessoirement de minimiser l'espace nécessaire au démontage de cet élément de mesure.

En effet, au travers de ce déport de la tête de connexion, tous les éléments de mesure, d'un type donné, destinés à équiper une installation peuvent être pourvus de câbles de raccordement d'une même longueur standard, correspondant à la distance la plus importante séparant la ou les sondes d'un dispositif de capteur de sa tête de connexion. En effet, l'excèdent de câble, pour les dispositifs de capteur où cette distance entre sondes et tête de connexion est moindre, peut prendre être aisément place extérieurement au support de montage, voire dans la tête de connexion.

Ainsi, l'invention concerne un dispositif de capteur comportant un élément de mesure muni d'au moins une sonde de mesure conçue apte à prendre position au fond d'un support de montage pourvu, à une extrémité débouchante opposée audit fond, d'une tête de fermeture conçue pour être traversée, notamment de manière étanche, par au moins un câble de raccordement électrique défini apte à relier la ou les sondes à une tête de connexion externe, caractérisé par le fait que :
- l'élément de mesure est conçu démontable et ladite tête de fermeture est de type escamotable par rapport au support de montage ;
- le ou les câbles de raccordement électriques sont définis d'une longueur adaptée pour autoriser leur raccordement à une tête de connexion externe déportée ;
- ce ou ces câbles de raccordement sont engagés dans une gaine de poussée définie apte à assurer le maintien de la ou des sondes au fond du support de montage et repousser la ou les sondes de l'élément de mesure en bonne position dans le support de montage.

Les avantages découlant de la présente invention consistent en ce que le fabricant de ces dispositifs de capteur peut largement optimiser le stock des éléments de mesure qu'il tient à disposition de ses clients, auxquels il peut proposer une garantie d'approvisionnement dans les meilleurs délais.

Par ailleurs, moyennant un nombre réduit d'éléments de mesure en réserve, les utilisateurs sont en mesure de remédier à une panne d'un dispositif de capteur quelconque au niveau de leur installation, ceci dans un temps d'intervention réduit permettant d'éviter, le cas échéant, l'arrêt de fonctionnement de l'adite installation.

D'autres buts et avantages de la présente invention apparaîtront au cours de la description qui va suivre se rapportant à des exemples de réalisation donnés à titre indicatif et non limitatif.

La compréhension de cette description sera facilitée en se référant aux dessins ci-joints dans lesquels :
- la figure 1 est une représentation schématisée d'un dispositif de capteurs comportant un support de montage d'une longueur déterminée ;
- la figure 2 est une vue similaire à la figure 1 illustrant le dispositif de capteur avec un support de montage dont la longueur est différente ;
- les figures 3 et 4 représentent, de manière schématisée, des dispositifs de capteurs intégrant un guide de positionnement de l'élément de mesure, ce guide étant, dans un cas, monté à demeure et, dans l'autre, prévu de nature démontable ;
- la figure 5 illustre, de manière schématisée, un mode de réalisation particulier d'un élément de mesure comportant des moyens élastiques qui, en combinaison avec la gaine de poussée permettent de maintenir sous contrainte élastique la ou les sondes en fond de support de montage ;
- la figure 6 illustre, de manière schématisée, un élément de mesure comportant une gaine de poussée semi-rigide ;
- la figure 7 est un schéma illustrant le raccordement de plusieurs dispositifs de capteur au travers d'une même tête de connexion.

Telle que représentée dans les figures des dessins ci-joints, la présente invention a trait au domaine des dispositifs de capteurs.

Un tel dispositif de capteur 1, de type capteur de température ou autre, comporte un élément de mesure 2 conçu apte à être démonté et muni d'au moins une sonde de mesure 3 de nature variable, comme, par exemple, des sondes à résistances, des thermistances, des thermocouples, etc....

Cette sonde 3 est prévue pour prendre position au fond 4 d'un support de montage 5 plongeant dans le milieu dans lequel la mesure doit être effectuée.

Ainsi, ce support de montage 5 présente une longueur L1, L2 dépendant très souvent du type de mesure à réaliser. Par exemple, cette longueur L2 peut être plus importante pour pouvoir prélever la température en profondeur dans le milieu dans lequel plonge ce support de montage 5.

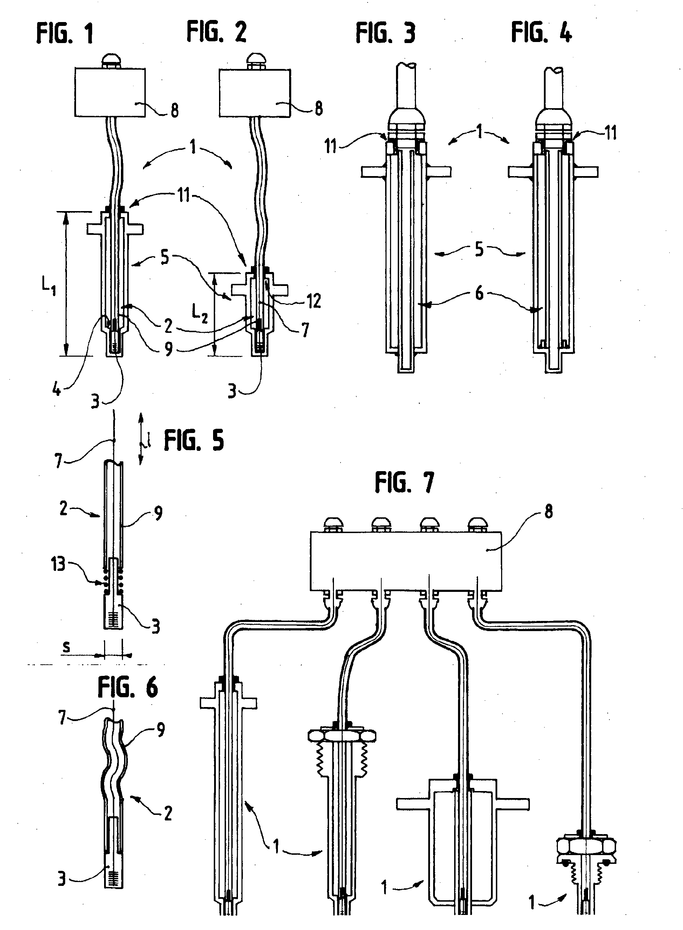

Comme représenté dans la figure 3, intérieurement au support de montage 5 peut être implanté, de manière fixe, un guide 6 destiné à permettre à l'élément de mesure 2 d'être repoussé, très exactement au niveau de la zone où doit s'effectuer la mesure.

La figure 4 se distingue du mode de réalisation de la figure 3 en ce que le support de montage 5 reçoit, intérieurement, un guide 6 prévu démontable.

Par ailleurs, cet élément de mesure 2 comporte au moins un câble de raccordement 7 permettant de relier la ou les sondes 3 à une tête de connexion 8, étant précisé que ce câble de raccordement 7 est choisi de longueur totale L supérieure à la longueur 11, 12 la plus importante des supports de montage de destination 5, ceci de manière à pouvoir déporter, de manière suffisamment accessible, ladite tête de connexion 8.

Plus exactement, le support de montage 5 comporte à son extrémité débouchante 12 une tête de fermeture escamotable 11 conçue apte à être traversée, notamment de manière étanche, par le ou les câbles de raccordement électrique 7 définis de longueur adaptée pour autoriser leur raccordement à une telle tête de connexion externe 8 déportée.

En déportant, ainsi, la tête de connexion 8, tous les éléments de mesure 2, d'un type donné, destinés à équiper une même installation peuvent être pourvus de câbles de raccordement 7 d'une même longueur standard L définie de manière à permettre le raccordement de la sonde 3 d'un dispositif de capteur 1 qui est la plus éloignée de sa tête de la connexion 8 au niveau de cette installation. En effet, l'excèdent de câble, pour les dispositifs de capteur 1 où cette distance entre sondes 3 et tête de connexion 8 est moindre, peut prendre aisément place extérieurement au support de montage 5, sous une forme enroulé sur lui-même, voire dans la tête de connexion déportée 8.

La tête de fermeture escamotable 11 peut adopter différentes formes de réalisation. En particulier, elle peut être vissée ou emboîtée sur le support de montage 5. De manière particulière, elle peut être équipé d'un presse-étoupe susceptible de garantir la fermeture étanche autour des câbles de raccordement 7 ou d'une gaine de protection entourant ces derniers.

Tout particulièrement, sur les câbles de raccordement 7 est engagé une gaine de poussée 9 qui permet de repousser la ou les sondes 3 dans la position qu'il convient en fond 4 de support de montage 5.

A propos de cette gaine de poussée 9, si elle est choisie, préférentiellement, de section au plus égale à la section générale s de l'élément de mesure 2, elle peut être définie souple, semi-rigide ou rigide, étant précisé qu'en choisissant une gaine souple, cette souplesse est définie telle à permettre à cette gaine de remplir la fonction qui lui est attribuée, c'est à dire repousser la ou les sondes 3 de l'élément de mesure 2 en bonne position dans le support de montage 5.

En coopération avec la tête de fermeture 11, la gaine de poussée 9 peut contribuer au maintien de la ou des sondes 3 dans cette position en fond 4 de support de montage 5 en cours d'utilisation.

L'élément de mesure 2 peut encore être équipé de moyens de rappel élastiques 13 conçus aptes à repousser sous contrainte élastique cette ou ces sondes 3 en fond 4 de support de montage 5, plus particulièrement lorsque la tête de fermeture 11 est refermée sur ce dernier.

Ainsi, ces moyens de rappel élastiques 13 peuvent être conçus sous forme d'un ressort hélicoïdal interposé entre la gaine de poussée 9 et, selon le cas, la tête de fermeture 11 ou le corps intégrant la ou les sondes 3, comme illustré dans la figure 5.

Selon un autre mode de réalisation, la gaine de poussée 9 est elle-même conçue, en tout ou partie, sous forme d'un ressort compressible axialement.

Selon encore un autre mode de réalisation, la gaine de poussée 9 est conçue en un matériau compressible.

D'ailleurs une gaine 9 en matériau souple peut concevoir, en soi, de tels moyens de rappel élastiques 13.

Quant à la tête de connexion 8, elle peut être indépendante pour chaque dispositif de capteur 1 comme représenté dans les figures 1 et 2.

Cependant et tel que visible dans le schéma correspondant à la figure 7, plusieurs dispositifs de capteurs 1 peuvent se partager une même tête de connexion 8.

Celle-ci peut se présenter sous forme d'une simple boite de jonction permettant le raccordement des dispositifs de capteurs 1 à une unité de gestion de fonctionnement d'une installation. Elle peut encore recevoir une électronique d'interprétation des informations recueillies au travers d'une ou plusieurs sondes 3 d'un ou plusieurs éléments de mesure 2, électronique dont peuvent dépendre des moyens de signalisation visuels ou sonores conçus aptes à informer un opérateur sur l'état du fonctionnement d'une installation dont il a le contrôle.

## Revendications

1. Dispositif de capteur comportant un élément de mesure (2) muni d'au moins une sonde de mesure (3) conçue apte à prendre position au fond (4) d'un support de montage (5) pourvu, à une extrémité débouchante (12) opposée audit fond (4), d'une tête de fermeture (11) prévue pour être traversée, notamment de manière étanche, par au moins un câble de raccordement électrique (7) défini apte à relier la ou les sondes (3) à une tête de connexion externe(8), **caractérisé par le fait que** :
- l'élément de mesure (2) est conçu démontable et ladite tête de fermeture (11) est de type escamotable par rapport au support de montage (5) ;
- le ou les câbles de raccordement électriques sont définis d'une longueur (L) adaptée pour autoriser leur raccordement à une tête de connexion externe (8) déportée ;
- ce ou ces câbles de raccordement (7) sont engagés dans une gaine de poussée (9) définie apte à assurer le maintien de la ou des sondes (3) au fond (4) du support de montage (5) et repousser la ou les sondes (3) de l'élément de mesure (2) en bonne position dans le support de montage (5).

2. Dispositif de capteur selon la revendication 1, **caractérisé par le fait que** l'élément de mesure (2) est équipé de moyens de rappel élastique (12) conçus aptes à repousser sous contrainte élastique la ou les sondes (3) en fond (4) de support de montage (5).

3. Dispositif de capteur selon les revendications 1 et 2, **caractérisé par le fait que** les moyens de rappel élastique (13) sont conçus sous forme d'un ressort hélicoïdal interposé entre la gaine de poussée (9) et la tête de fermeture (11) refermant le support de montage (5) à son extrémité débouchante (12) ou entre la gaine de poussée (9) et le corps intégrant la ou les sondes (3).

4. Dispositif de capteur selon les revendications 1 et 2, **caractérisé par le fait que** la gaine de poussée (9) est conçue en tout ou partie sous forme d'un ressort compressible axialement.

5. Dispositif de capteur selon les revendications 1 et 2, **caractérisé par le fait que** la gaine de poussée (9) est conçue en un matériau compressible.

6. Dispositif de capteur selon les revendications 1 et 2, **caractérisé par le fait que** les moyens de rappel élastiques (13) sont constitués par la gaine de poussée (9) en matériau souple.

## Claims

1. Sensor device, including a measuring element (2) provided with at least one measuring probe (3) designed capable of being positioned in the bottom (4) of a mounting support (5) provided, at an emerging end (12) opposite said bottom (4), with a closing head (11) designed for being crossed, namely in a tight way, by at least one electrical connecting cable (7) designed capable of connecting the probe or probes (3) to an external connecting head (8), wherein:
- the measuring element (2) is designed dismountable and said closing head (11) is retractable with respect to the mounting support (5);
- the electric connecting cable or cables have a length (L) adapted for permitting their connection to an offset external connecting head (8);
- this or these connecting cable or cables (7) are inserted in a pushing sheath (9) designed capable of ensuring the maintaining of the probe or probes (3) in the bottom (4) of the mounting support (5) and of pushing the probe or probes (3) of the measuring element (2) back into the right position in the mounting support (5).

2. Sensor device according to claim 1, wherein the measuring element (2) is provided with springy restoring means (12) designed capable of pushing back under elastic stress the probe or probes (3) in the bottom (4) of the mounting support (5).

3. Sensor device according to claims 1 and 2, wherein the springy restoring means (13) is in the form of a helical spring interposed between the pushing sheath (9) and the closing head (11) closing the mounting support (5) at its emerging end (12), or between the pushing sheath (9) and the body integrating the probe or probes (3).

4. Sensor device according to claims 1 and 2, wherein the pushing sheath (9) is designed in its whole or in part as an axially compressible spring.

5. Sensor device according to claims 1 and 2, wherein the pushing sheath (9) is made out of a compressible material.

6. Sensor device according to claims 1 and 2, wherein the springy restoring means (13) are constituted by the pushing sheath (9) made out of a flexible material.

## Patentansprüche

1. Sensorvorrichtung, umfassend ein Messelement (2), das mit zumindest einer Messsonde (3) ausgestattet ist, die geeignet vorgesehen ist, um im Boden (4) einer Montagehalterung (5) positioniert zu werden, die an einem ausmündenden, dem besagten Boden (4) gegenüberliegenden Ende (12) mit einem Verschlusskopf (11) ausgestattet ist, der vorgesehen ist, um insbesondere abgedichtet von zumindest einem elektrischen Anschlusskabel (7) durchquert zu werden, das geeignet gebildet ist, um die Sonde bzw. Sonden (3) mit einem externen Anschlusskopf (8) zu verbinden, **dadurch gekennzeichnet, dass**:
- das Messelement (2) zerlegbar vorgesehen ist und der besagte Verschlusskopf (11) einziehbar hinsichtlich der Montagehalterung (5) ist;
- das bzw. die elektrischen Anschlusskabel eine bestimmte Länge (L) haben, die angepasst ist, um ihre Verbindung mit einem abgelegenen externen Anschlusskopf (8) zu erlauben;
- dieses bzw. diese Anschlusskabel (7) in einer Schubhülse (9) eingefüht sind, die geeignet ausgelegt ist, um das Halten der Sonde bzw: Sonden (3) am Boden (4) der Montagehalterung (5) zu sichern und die Sonde bzw. Sonden (3) des Messelements (2) lagerecht in der Montagehalterung (5) zurückzuschieben.

2. Sensorvorrichtung nach Anspruch 1, **dadurch gekennzeichnet, dass** das Messelement (2) mit elastischen Rückstellmitteln (12) ausgestattet ist, die geeignet vorgesehen sind, um unter Federbelastung die Sonde bzw. Sonden (3) im Boden (4) der Montagehalterung (5) zurückzuschieben.

3. Sensorvorrichtung nach Ansprüchen 1 und 2, **dadurch gekennzeichnet, dass** die elastischen Rückstellmittel (13) als eine Schraubenfeder ausgebildet sind, die zwischen der Schubhülse (9) und dem Verschlusskopf (11), der die Montagehalterung (5) an ihrem ausmündenden Ende (12) zumacht, oder zwischen der Schubhülse (9) und dem Körper, der die Sonde bzw. Sonden (3) integriert, eingefügt ist.

4. Sensorvorrichtung nach Ansprüchen 1 und 2, **dadurch gekennzeichnet, dass** die Schubhülse (9) ganz oder teilweise als eine axial komprimierbare Feder ausgelegt ist.

5. Sensorvorrichtung nach Ansprüchen 1 und 2, **dadurch gekennzeichnet, dass** die Schubhülse (9) aus einem komprimierbaren Material vorgesehen ist.

6. Sensorvorrichtung nach Ansprüchen 1 und 2, **dadurch gekennzeichnet, dass** die elastischen Rückstellmittel (13) durch die Schubhülse (9) aus einem elastisch nachgiebigen Material ausgebildet sind.
